# EUROPÄISCHE PATENTANMELDUNG

(11) **EP 2 335 926 A1**
(43) Veröffentlichungstag der Anmeldung: **22.06.2011**
(21) Anmeldenummer: 10015669.4
(22) Anmeldetag: 15.12.2010
(51) Int. Cl.: B32B 37/12, B32B 37/22, B30B 3/00

(54) **Laminiervorrichtung und dessen Verwendung**

(30) Priorität: 15.12.2009 DE 102009058334
(71) Anmelder: Steinemann Technology AG, 9015 St. Gallen (CH)
(72) Erfinder: Fässler, Albert, 8370 Simach (CH); Walther, Thomas, 9000 St. Gallen (CH)
(74) Vertreter: Arat, Dogan

(57) **Zusammenfassung**

Vorrichtung zum Beschichten eines bogenförmigen Trägermaterials (6) mit einem bahnförmigen Beschichtungsmaterial (1)
- mit einer Zuführeinrichtung zu einer Kaschiervorrichtung (7) bestehend aus einer Folienwalze (19) und einer Gegendruckwalze (20), geeignet zur Verbindung des bogenförmigen Trägermaterials mit dem bahnförmigen Beschichtungsmaterials zu einem Laminat (8),
- wobei die Folienwalze und/oder die Gegendruckwalze eine Temperiervorrichtung aufweist,
- mit einer Schneidstation (9), geeignet zum Auftrennen des Laminats in einzelne Abschnitte
- mit einem Klebstoffauftragswerk (4), geeignet zum Aufbringen von einem Klebstoff (5) auf das bahnförmige Beschichtungsmaterial,

wobei
- das Klebstoffauftragswerk einen reaktiven Klebstoff, insbesondere Einkomponenten- oder Zweikomponenten- Polyurethanklebstoff oder UV-Klebstoff auf das bahnförmige Beschichtungsmaterial (1) aufbringt, oder
- das bahnförmige Beschichtungsmaterial eine Thermofolie umfasst, welche durch die Temperiervorrichtung zusammenwirkt, und
- die Schneidstation unmittelbar nach der Kaschiervorrichtung angeordnet sein soll.

## Beschreibung

Die Erfindung beschreibt eine Vorrichtung nach dem Oberbegriff des Anspruchs 1 und eine Verwendung nach Anspruch 11.

### STAND DER TECHNIK

Aus dem Stand der Technik sind unterschiedliche Laminiermaschinen bekannt. Bogenlaminationsmaschinen sind unter anderem aus den Schriften DE 198 17 835, DE 44 12 091, DE 43 36 835 und DE 1 194 562 beschrieben.

Die EP 1 282 510 B beschreibt eine Maschine mit einem rotierenden Schneidmesser, einem so genannten Heisstrennmesser oder Hot-Knife. Die Messerschneide besteht aus einem Widerstandsmetall, dass mit Stromdurchfluss auf eine Temperatur von 300-550° Celsius erwärmt wird. Das Messer schneidet nicht im eigentlichen Sinne, sondern schmilzt die Folie während der Kontaktzeit. Die Schneidfunktion des Schneidmessers erfolgt rechnergesteuert in Abhängigkeit von der Zufuhrgeschwindigkeit, wobei die Einzelbogen Stoss an Stoss oder geschuppt in den Kaschierspalt zum Zwecke der Kaschierung zugeführt werden.

### Aufgabe

Die Aufgabe der Erfindung liegt darin die Nachteile des Stand der Technik abzustellen und eine Vorrichtung zur Verfügung zu stellen, welche eine schnellere Laminierung mit wenigen Bearbeitungsschritten und einer niedrigen Fehlerquelle zur Verfügung zu stellen.

Ziel der Erfindung ist eine Dual-use Anlage, wobei zwischen den Betriebsarten Thermolaminieren, gegebenenfalls Dispersionslaminieren und Laminieren mit reaktiven Klebstoffsystemen (auf Basis Polyurethan oder UV-Klebstoffsysteme gewechselt werden kann, wobei die Laminatbahn unmittelbar nach dem Kaschierspalt, ohne Zwischenschaltung weiterer Bearbeitungsschritte, mit einer Trenneinrichtung wieder in Einzelbogen getrennt wird und gleichzeitig eine gute Planlage des Bogens, unabhängig von dem verwendeten Klebstoffsystem gewährleistet wird.

### Lösung der Aufgabe

Zur Lösung der Aufgabe führt der kennzeichnende Teil von Anspruch 1.

Die Begriffe Lamination und Kaschierung sind nicht immer sauber voneinanderzu trennen, so dass die Begriffe Laminierung / Lamination bzw. Kaschierung im Folgenden synonym für das Verbinden mindestens zweier Lage mittels eines Haftvermittlers / Klebstoff verwendet wird.

Die Lamination ist ein Verarbeitungsverfahren zum vollflächigen oder partiellen Verbinden von zwei Lagen gleicher oder verschiedener Materialien mittels Klebstoff, insbesondere das Überziehen von Papier, Karton oder Pappe mit transparenter, metallisierten, veredelter, bedruckter, strukturierter und / oder gefärbter Kunststoffolie. Der Begriff Kunststoffolie umfasst explizit auch Folien basierend auf so genannten Biokunststoffen, die vollständig oder teilweise aus nachwachsenden Rohstoffen gebildet werden. Typische Folientypen für Laminierprozesse bestehen aus Zellulose-Hydrat, Acetat, Polyvinylchlorid, Polethylen, Polypropylen, OPP und andere geeignete Kunststoffolien. Die Folie kann einlagig sein oder selbst ein Verbund aus zwei oder mehr Lagen sein. Die Folienbahn kann auch partiell oder vollflächig mit einer Lackschicht beschichtet sein. Die Folie kann auch eine Metallfolie sein, die auf ein Trägersubstrat auflaminiert wird. Die Aufzählung ist nicht beschränkend und unter dem Begriff Folie bzw. Folienbahn wird im Sinne der Beschreibung alle Materialien verstanden, die als endlose Bahn vorliegen und flexibel genug sind, dass sie in einem Kaschierspalt einer Bogenlaminiermaschine mit einem Trägersubstrat verbunden werden können.

Als Beschichtungsmaterial in Laminierprozessen werden Folien eingesetzt mit einer Materialstärke von 5 bis 250um, vorzugsweise liegt die Materialstärke in einem Bereich von 10-25 um.

Die Klebstoffe zum Verbinden der Laminatlagen kann man grob in Dispersionsklebstoffe, Hotmelts, reaktive Klebstoffe und deren Mischformen einteilen. Wässrige Dispersionskleber werden auf die endlose Folienbahn aufgetragen und der Dispersion wird anschliessend in einem Trockner unter Einwirkung von Wärme"(durch Infrarotstrahlung, durch' Konvektionstrocknung, durch Mikrowellentrocknung oder eine beliebige Kombination dieser Trocknungsverfahren) soviel Lösemittel, meist Wasser, entzogen, dass der Dispersionskleber klebrig wird.

Bei den reaktiven Klebstoffsystemen kommen UV-vernetzende Klebstoffe zum Einsatz, die entweder nach dem radikalischen oder kationischeii Wirkpririzip arbeiten. Eine andere, häufig eingesetzte reaktive Klebstoffgruppe sind feuchtigkeiisvernetzende Einkomponenten Polyurethanklebstoffe oder Zweikomponentenklebstoffe (z.B. 2 Komponenten Polyurethanklebstoffe). Schmelzklebstoffe, auch Heißklebestoffe, Heißkleber oder (in der Schweiz) Heiß leim genannt, sind lösungsmittelfreie und bei Raumtemperatur mehr oder weniger feste Produkte, die im heißen Zustand auf die Klebefläche aufgetragen werden, und beim Abkühlen die Verbindung herstellen. Diese auch als Hotmelt bekannte Gruppe von Klebstoffen basiert auf verschiedenen chemischen Rohstoffen. Hotmelts können auch reaktive Mechanismen enthalten, z.B. so genannte Polyurethan - Hotmelts, die eine gute Ersthaftung der Materialien über den Hotmelt - Mechanismus und anschliessend eine reaktive reaktive Aus- bzw. Durchhärtung aufweisen.

Bei einer dritten Gruppe, den so genannten Thermolaminierfolien, wird bei oder nach der Herstellung der Folie eine Klebstoffschicht aufgebracht, die im Lieferzustand trocken ist. Durch die erwärmte Kaschiertrommel wird diese Kleberschicht aktiviert und klebrig. Die Folie wird in dem Kaschierspalt unter Einwirkung hohen Druckes und Wärme auf das Trägermaterial transferiert. Für die Verarbeitung von Folien wird kein Klebstoffauftragswerk in der Laminiermaschine benötigt.

Es ist bekannt bogenförmiges Material in einer Bogenlaminiermaschine mit einem geschlossen Film eines Kunststoffmaterials zu beschichten. Ein Strom von einzelnen Substratbogen werden in solchen Maschinen, unter- oder überschuppt oder Stoss an Stoss, einem Kaschierspalt zugeführt, der aus einer Kaschierwalze und einer Gegendruckwalze gebildet wird. In den Kaschierspalt wird gleichzeitig eine endlose Folienbahn eingeführt, die mit einem Klebstoff beschichtet ist bzw. vor dem Eintritt in den Kaschierspalt in der Laminiermaschine mit einem Klebstoff beschichtet wird, die in dem Kaschierspalt unter der Einwirkung von Druck und gegebenenfalls Wärme mit dem bogenförmigen Trägersubstrat verbunden wird. In einer anderen Ausführung wird nicht die endlose Folienbahn, sondern das bogenförmige Trägersubstrat in einer Beschichtungseinrichtung in der Produktionsflussrichtung vordem Eindringen in den Kaschierspait mit einem Klebstoff beschichtet. Der Verbund bzw. das Laminat aus endloser Folienbahn und bogenförmigen Trägermaterial wird danach an den Überlappungs- bzw. Stossstellen des bogenförmigen Trägersubstrats mit einer Trennvorrichtung wieder in einzelne Laminat- Bogen getrennt.

Das direkte Schneiden nach dem Kaschierspalt mit einem Schneidmesser oder einer anderen Trennvorrichtung hat den Nachteil, dass Bogenverwerfungen, die durch die Spannung und einem gewissen Schrumpfen der Folie bei dem Kaschiervorgang und durch die Trocknung verursacht bei Einsatz von schnell härtenden Klebstoffen werden, nicht entgegengewirkt werden kann. Bei aufwendigeren Laminiermaschinen ist zwischen der Kaschierstation und der Schneidstation Reckeinrichtungen und / oder Breitstreckwalzen angeordnet, die für eine Planlage des Bogens nach dem Schneidvorgang sorgen. Eine Reckeinrichtung ist zum Beispiel eine scharfe Kante, über die die Laminatbahn, bestehend aus der Folienbahn und den Trägermaterialbogen, gezogen wird. Eine solche Lösung ist aber nur möglich, wenn das gewählte Klebersystem schon direkt nach dem Kaschierspalt eine gute Haftung zwischen bogenförmigen Trägermaterial und der Folie gewährleistet. Dies ist in den meisten Fällen bei Dispersionsklebern und bei Thermofolien der Fall. Bei einem Einsatz von Klebstoffen auf Basis von Polyurethan oder UV- härtenden Klebstoffen nicht der Fall. Die Klebekraft ist erst dann gegeben, wenn der Klebstoff ausreichend polymerisiert ist. Diese Systeme haben jedoch den Vorteil, dass sie direkt nach dem Kaschieren geschnitten werden können bzw. müssen, aber auch eine gute Planlage aufweisen. Ein Dual - Betrieb zwischen einem schnell haftenden Klebersystem, z.B. einer Thermofolie, und einem polymerisierenden Klebstoffsystem, erfordert aber aufgrund der unterschiedlichen Haftungsmechanismen zwei Schneidesysteme, da bei einem schnell Härtenden Klebstoffsystem die Planlage mit einem Reckingsystem und / oder einer Breitstreckwalze erzielt werden muss. Doppelte Trennvorrichtungen sind aber aufwendig und würden eine solche Laminieranlage unwirtschaftlich machen.

Die unmittelbare Anordnung bedeutet in diesem Zusammenhang, dass zwischen der Schneidestation und der Kaschiervorrichtung keine weiteren Bearbeitungsschritte in der Weise vorgenommen werden muss, wie beispielsweise nochmaliges Gegendrücken über eine Kante zur Erreichung der Planheit des Laminats. Plan ist der Laminat dann, wenn er im Wesentlichen keine Wölbung aufweist.

Als Antrieb kommen grundsätzlich verschiedene Antriebe in Betracht, soweit sie die technischen Anforderungen zum Betrieb einer erfindungsgemässen Vorrichtung, insbesondere der Folienwalze und Gegendruckwalze erfüllen.

Die Geschwindigkeitsdifferenz kann sich bei gleichem Umfang von Folienwalze und Gegendruckwalze aus einer unterschiedlichen Umlaufgeschwindigkeit ergeben oder durch verschiedene Durchmesser der Walzen und gleicher Umlaufgeschwindigkeit.

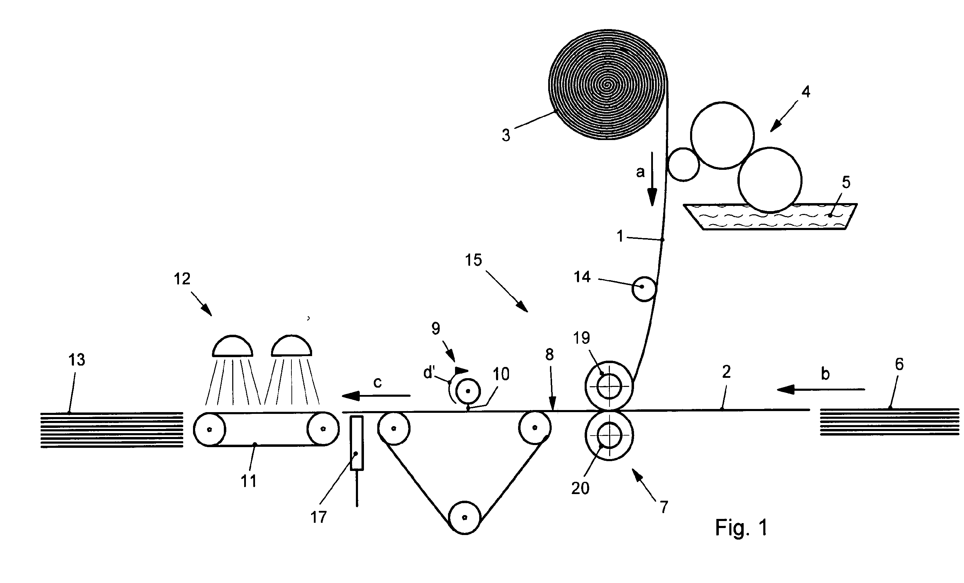

Die Figur 1 zeigt eine Laminieranlage mit folgenden Merkmalen, auf die später Bezug genommen wird:

Die Schneidstation 9 weist auf der Folienseite ein thermisches Schneidmesser 10 auf, das an einem Messerbalken befestigt ist und sich über die gesamte Breite des Laminats erstreckt. Die Messerbalken drehen sich in Pfeilrichtung d', also gleichsinnig zur Vorschubrichtung c des Laminats 8. Das Schneidmesser 10 besteht vorzugsweise aus einem elektrischen Draht oder aus einem feinen Metallstreifen, der durch elektrischen Widerstand aufgeheizt werden kann. Alternativ, und in dieser Zeichnung nicht dargestellt, kann zu dem thermischen Schneidmesser auch ein Schneidemesser, ein rotierendes Messer, eine Ritz-oder Diamantrad eingesetzt werden, wobei die Folie an der Bogenkante durchgeschnitten oder verletzt und eingeschnitten und durchgerissen wird. Verwendet werden kann in der Schneidstation jedes Trennverfahren, das geeignet ist die Laminatbahn an den Bogenenden des Trägermaterials wieder in Einzelbogen zu trennen. Nach der Schneidstation 9 ist im Vorschubbereich des Laminats 8 eine Lichtschranke bzw. ein Messgeber 17 angeordnet, mit dem die Vorderkante eines Laminatabschnitts ermittelt werden kann. Durch eine etwas erhöhte Geschwindigkeit an der Transportvorrichtung 11 ist dafür gesorgt, dass die getrennten Laminatabschnitte 16 sofort abgezogen werden und dass so zwischen den einzelnen Laminatabschnitten ein Zwischenraum entsteht. Erfindungswesentlich ist unter anderem, dass die Schneidvorrichtung unmittelbar nach dem Kaschierwalzenpaar 7 angeordnet ist, ohne dass weitere Bearbeitungsschritte des Laminats, wie recken, Umlenkung der Bewegungsrichtung oder der Lauf über eine Breitstreckwalze erfolgt. Die Figur 1 zeigt ferner rein schematisch den Vorgang des Kaschierens einzelnen Bögen mit einer Folie 1 in einem Kaschierwerk 15. Die Folie 1 wird als endlose Bahn von einer Rohfolienrolle 3 in Pfeilrichtung a abgezogen und dabei in einem ersten Bertriebsmodus mit einem flüssigen Klebstoff mit einem Klebstoffauftragswerk 4 beschichtet. Das Klebstoffauftragswerk kann auch eine Breitschlitzdüse oder ein anderes geeignetes Auftragverfahren abbilden. ln dieser schematischen Zeichnung ist das Kleberauftragswerk als Walzenauftragswerk ausgebildet. In einem zweiten Betriebsmodus wird eine mit einem Kleber vorbeschichtete Thermofolie eingesetzt und die Folie wird nicht mit einem Klebstoff beschichtet. ln dem ersten Betriebsmodus wird der Klebstoff 5 über ein Auftragswerk 4 aufgetragen und verteilt. In dem zweiten Betriebsmodus bei Einsatz einer Thermofolie ist das Kleberauftragswerk 4 inaktiv. Die Folie 1 wird schliesslich den Kaschierwalzenpaar 7 zugeführt. Die Einzelbogen 2 werden von einem Bogenstapel 6 entnommen und mit Hilfe des Bogenanlegers in Pfeilrichtung b hintereinander ebenfalls in den Kaschierspalt der Kaschierwalzen7 geführt. Das gebildete Laminat 8 wird mit der Schneidvorrichtung 9 wieder zu Laminatbögen getrennt, wobei lediglich die Folie 1 durchgeschnitten wird. Anschliessend werden die Laminatabschnitte 16 auf einen auf einen Laminatstapel 13 abgelegt. Im Falle eines UV - härtbaren Klebstoffes sind zwischen der Schneidstation 9 und dem Abstapler zur Bildung eines Laminatstapels 13 eine Härtungsvorrichtung 12 mit UV-Lampen oder UV-LEDS angeordnet.

Die Kaschierwalzen 7 bestehen aus eineroberen Folienwalze 19 (auch Mutterwalze oder Kaschierwalze genannt) sowie einer unteren Bogenwalze oder Gegendruckwalze 20. Gegendruckwalze 20 und 'Folienwalze 19 sind in der Regel in der Geschwindigkeit miteinander gekoppelt, jedoch haben Versuche gezeigt, dass die Planlage der Laminatabschnitte 16 im Thermobetrjeb sich positiv beeinflussen lässt, wenn die Gegendruckwalze 20 sich mit einer leichten, möglichst frei wählbaren, Differenzgeschwindigkeit betreiben lässt. Dies ermöglicht den Betrieb einer Laminiermaschine mit einem reaktiven Klebstoff und alternativ mit einer Thermofolie, da die schwierige Planlagensituation im zweiten Betriebsmödus, mit einer Thermofolienapplikation, beeinflussen lässt. Hierdurch ist ein wirtschaftlicher Betreib einer solchen Anlage über grosse Auflagenbereiche möglich. Die niedrigen Auflagenbereiche werden durch die Thermofolienapplikation abgedeckt, während der andere Betriebsmodus mit kostengünstigen reaktiven Systemen abgedeckt wird. Im niedrigen Auflagenbereich entfallen die Rüstzeiten für den Kleberauftrag, während bei hohen Auflagen die Rüstzeiten für den Kleberauftrag weniger zu Buche schlagen, dafür aber die im Vergleich zu den Thermofolien geringeren Folien und Kleberkosten zu Buche schlagen.

Die Differenzgeschwindigkeit zwischen den Kaschierwalzen 7 lässt sich mit einem Eigenantrieb der Gegendruckwalze 20 realisieren. Der elektrische, steuerbare Antrieb ist als Direktantrieb ausgelegt oder über ein Getriebe mit dem Antrieb der Gegendruckwalze 20 verbinden. Alternativ lässt sich die Differenzgeschwindigkeit zwischen den Kaschierwalzen 7 über ein mechanisches, verstellbares Getriebe realisieren, wobei über das Getriebe beide Kaschierwalzen 7 den gleichen Antrieb haben.

Die Differenzgeschwindigkeit zwischen den Kaschierwalzen 7 zum Erreichen der Planlage des Laminatabschnitte 16 lässt sich am Einfachsten durch Benutzerangabe am Leitstand der Maschine vorgeben und verändern. Die Differenzgeschwindigkeit zwischen den Kaschierwalzen 7 muss den Gegebenheiten des Laminats angepasst werden, so dass gerade die Wölbung des Laminatabschnitts 16 ausgeglichen wird.

Die Differenzgeschwindigkeit kann auch einer vorgegebenen oder durch Benutzereingabe gewählten Kennlinie folgen, die abhängig von der Produktionsgeschwindigkeit die Differenzgeschwindigkeit anpasst. ln einer bevorzugten Ausführung wird die gefundene Differenzgeschwindigkeit für eine bestimmte Produktionskombination aus Bedruckstoff und Folie in dem Leitstand als Rezept hinterlegt, so dass bei einem Wiederholauftrag eine gute Planlage des Laminatabschnitts sich sofort oder zu mindestens schneller einstellt. Das Rezept kann auch andere Parameter, wie Temperatur der Fojienwalze 19 und ist.nicht auf die Differenzgeschwindigkeit beschränkt.

Durch diese erfindungsgemässe Lösung lässt sich sehr kompakt eine Dual-Use Laminiermaschine bauen, die bei Laminiervorgängen mit und ohne Kleberauftrag eine gute Planlage garantiert. Die Planlage ermöglicht eine gute und störungsfreie Ablage der Laminatabschnitte 1 den Laminatstapel 13 und erleichtert die Weiterverarbeitung nach der Laminieren (z.B. Schneiden, Stanzen etc.).

### Bezugszeichenliste

| | | | | |
|---|---|---|---|---|
| 1 | Folienbahn (bahnförmiges Beschichtungsmaterial) | 34 | 67 | |
| 2 | Einzelbogen (bogenförmiges Trägermaterial) | 35 | 68 | |
| 3 | Folienvorratsrolle | 36 | 69 | |
| 4 | Kleberauftragswerk | 37 | 70 | |
| 5 | Bogenstapel | 38 | 71 | |
| 6 | | 39 | 72 | |
| 7 | Kaschierwalzen | 40 | 73 | |
| 8 | Laminatbahn | 41 | 74 | |
| 9 | Schneidstation / Schneidvorrichtung | 42 | 75 | |
| 10 | Heissmesser | 43 | 76 | |
| 11 | Förderband | 44 | 77 | |
| 12 | UV-Härtungsvorrichtung | 45 | 78 | |
| 13 | Laminatstapel | 46 | 79 | |
| 14 | Bahnspannungsregelung 15 | 47 | | |
| 15 | | 48 | | |
| 16 | Laminatbogen | 49 | | |
| 17 | Messgeber 18 | 50 | | |
| 18 | | 51 | | |
| 19 | Folienwalze | 52 | | |
| 20 | Gegendruckwalze | 53 | | |
| 21 | | 54 | | |
| 22 | | 55 | | |
| 23 | | 56 | | |
| 24 | | 57 | | |
| 25 | | 58 | | |
| 26 | | 59 | | |
| 27 | | 60 | | |
| 28 | | 61 | | |
| 29 | | 62 | | |
| 30 | | 63 | | |
| 31 | | 64 | | |
| 32 | | 65 | | |
| 33 | | 66 | | |

## Patentansprüche

1. Vorrichtung zum Beschichten eines bogenförmigen Trägermaterials (2) mit einem bahnförmigen Beschichtungsmaterial (1)
- mit einer Zuführeinrichtung zu einer Kaschiervorrichtung (7) bestehend aus einer Folienwalze (19) und einer Gegendruckwalze (20), geeignet zur Verbindung des bogenförmigen Trägermaterials (2) mit dem bahnförmigen Beschichtungsmaterials (1) zu einem Laminat (8) ,
- wobei die Folienwalze (19) und/oder die Gegendruckwalze (20) eine Temperiervorrichtung aufweist,
- mit einer Schneidstation (9), geeignet zum Auftrennen des Laminats (8) in einzelne Abschnitte
- mit einem Klebstoffauftragswerk (4), geeignet zum Aufbringen von einem Klebstoff auf das bahnförmige Beschichtungsmaterial (1)
**dadurch gekennzeichnet, dass**
- das Klebstoffauftragswerk (4) einen reaktiven Klebstoff, insbesondere Einkomponenten- oder Zweikomponenten- Polyurethanklebstoff oder UV-Klebstoff auf das bahnförmige Beschichtungsmaterial 1 aufbringt, oder
- das bahnförmige Beschichtungsmaterial (1) eine Thermofolie umfasst, welche durch die Temperiervorrichtung zusammenwirkt, und
- die Schneidstation (9) unmittelbar nach der Kaschiervorrichtung (7) angeordnet ist.

2. Vorrichtung nach Anspruch 1, **dadurch gekennzeichnet, dass** die Folienwalze (19) und die Gegendruckwalze (20) jeweils unterschiedliche Umlaufgeschwindigkeiten umfassen, sodass die Gegendruckwalze (20) schneller oder langsamer als die Folienwalze (19) läuft.

3. Vorrichtung nach Anspruch 1 oder 2, **dadurch gekennzeichnet, dass** die Gegendruckwalze (20) und/oder die Folienwalze (19) jeweils einen eigenen Antrieb umfasst.

4. Vorrichtung nach einem der obigen Ansprüche 1 bis 3 **dadurch gekennzeichnet, dass** die Gegendruckwalze (20) und die Folienwalze (19) ein regelbares Differenzgetriebe umfasst, wobei sie über einen gemeinsamen Antrieb antreibbar sind.

5. Vorrichtung nach einem der obigen Ansprüche 3 oder 4, **dadurch gekennzeichnet, dass** der Antrieb ein Servomotor ist.

6. Vorrichtung nach einem der obigen Ansprüche 3 bis 5, **dadurch gekennzeichnet, dass** die Umlaufgeschwindigkeiten der Gegendruckwalze (20) und/oder der Folienwalze (19) über einen Rechner steuerbar ist.

7. Vorrichtung nach Anspruch 6, **dadurch gekennzeichnet, dass** der Rechner mit einer Eingabevorrichtung, wie einer Tastatur, einem Touch-Screen oder einer Sprachsteuerung versehen ist.

8. Vorrichtung, nach einem der obigen Ansprüche 1 bis 7, **dadurch gekennzeichnet, dass** das bogenförmige Trägermaterial (2) aus Karton-, Papier-, Verbundmaterialien- oder Kunststoffbogen ist.

9. Vorrichtung nach einem der obigen Ansprüche 1 bis 8, **dadurch gekennzeichnet, dass** das bahnförmige Beschichtungsmaterial (1) aus OPP, Polyester, Polyethylen oder Biokunststoffen besteht.

10. Vorrichtung nach einem der obigen Ansprüche 1 bis 9, **dadurch gekennzeichnet, dass** die Schneidstation (9) ein rotierendes Heisstrennmesser umfasst.

11. Verwendung einer Vorrichtung nach den Ansprüchen 1 bis 10, **gekennzeichnet durch** folgende Schritte:
- das bahnförmige Beschichtungsmaterial (1) wird **durch** das Klebstoffauftragswerk (4) mit einem reaktiven Klebstoff, insbesondere Einkomponenten- oder Zweikomponenten-Polyurethanklebstoff oder UV-Klebstoff versehen, oder
- das bahnförmige Beschichtungsmaterial (1) wird mit einer Thermofolie versehen,
- das bögenförmige Trägermaterial (2) und das bahnförmige Beschichtungsmaterial (1) werden der Kaschiervorrichtung (7) bestehend aus der Folienwalze (19) und der Gegendruckwalze (20) zugeführt,
- die Umlaufgeschwindigkeit der Folienwalze (19) und der Gegendruckwalze (20) wird **durch** einen Rechner eingestellt und gesteuert,
- die Umlaufgeschwindigkeit der Folienwalze (19) und der Gegendruckwalze (20) werden unabhängig voneinander eingestellt, sodass bei gleichem Durchmesser von Folienwalze (19) und Gegendruckwalze (20) eine Geschwindigkeitsdifferenz zueinander erreicht wird.

12. Verwendung nach Anspruch 11, **dadurch gekennzeichnet, dass** die Folienwalze (19) und/oder die Gegendruckwalze (20) temperiert wird.

13. Verwendung nach Anspruch 11 oder 12, **dadurch gekennzeichnet, dass** der Rechner oder Maschinenleitstand die Geschwindigkeitsdifferenz in einem Vorgang unter Beachtung der Materialparameter des bogenförmigen Trägermaterials (2) und des bahnförmigen Beschichtungsmaterials (1), sowie des eingesetzten reaktiven Klebers oder der Thermofolie in einem Speicher ablegt, sodass eine bevorzugte Geschwindigkeitsdifferenz für eine bestimmte Material und Kleberkombination gespeichert wird.

14. Verwendung nach Anspruch 13, **dadurch gekennzeichnet, dass** der Rechner oder Maschinenleitstand über Eingabe durch eine Tastatur oder Touch-Screen gesteuert und die Differenzgeschwindigkeit unabhängig von dem Speicher eingestellt wird.

15. Verwendung nach Anspruch 13 oder 14, **dadurch gekennzeichnet, dass** dem Rechner Daten über Materialparameter des bogenförmigen Trägermaterials (2) und des bahnförmigen Beschichtungsmaterials (1), sowie des eingesetzten reaktiven Klebers oder der Thermofolie aus einem Datenpool zur Verfügung gestellt werden, sodass aufgrund eines Algorithmus die Differenzgeschwindigkeit zwischen der Folienwalze (19) und der Gegendruckwalze (20) errechnet wird.
